# EUROPEAN PATENT SPECIFICATION

(11) **EP 4 423 180 B1**
(45) Date of publication and mention of the grant of the patent: **16.09.2026**
(21) Application number: 22812972.2
(22) Date of filing: 27.10.2022
(51) Int. Cl.: C08J 11/08, B29B 17/02, B32B 17/10

(54) **RECOVERING POLY(VINYL BUTYRAL) POLYMER**
WIEDERGEWINNUNG VON POLYVINYLBUTYRALPOLYMER
RÉCUPÉRATION DE POLYMÈRE DE POLY(BUTYRAL DE VINYLE)

(30) Priority: 28.10.2021 US 202163263162 P; 14.07.2022 US 202263368383 P; 28.09.2022 US 202263377410 P; 28.09.2022 US 202263377402 P; 28.09.2022 US 202263377405 P
(43) Date of publication of application: 04.09.2024
(73) Proprietor: Solutia Inc., St. Louis, Missouri 63141 (US)
(72) Inventor: YINONG, Ma, Longmeadow, MA 01106 (US)
(74) Representative: Wallinger Ricker Schlotter PartGmbB
(86) International application number: PCT/US2022/047970
(87) International publication number: WO 2023/076440

(56) References cited:
- WO-A1-2015/169705
- US-A- 3 256 212
- US-A1- 2009 209 667

## Description

### FIELD OF THE INVENTION

The present invention is related to the field of poly(vinyl butyral) resin manufacture, and, specifically, the present invention is in the field of the recovery and reuse of post-industrial and post-consumer poly(vinyl butyral).

### DESCRIPTION OF RELATED ART

Laminated glass panels, such as automobile windshields and architectural safety glass, are typically composed of two sheets of glass laminated together with an interposed, plasticized polymer layer. Poly(vinyl butyral) ("PVB") is a common polymer that typically forms the main component in the polymeric interlayer of the vast majority of automotive windshields and architectural safety glass. Commonly, PVB resin is manufactured through a synthesis process that begins with the separation of ethane directly from natural gas or from the petroleum refining process. Ethane is then steam cracked to produce ethene (ethylene), which, along with acetic acid feedstock, is used to produce vinyl acetate monomers. Vinyl acetate monomers, through free-radical polymerization, are polymerized to poly(vinyl acetate). Poly(vinyl acetate) is hydrolyzed to poly(vinyl alcohol), which is then reacted with butyraldehyde to form poly(vinyl butyral).

The above-described synthesis process is energy intensive and dependent upon the use of non-renewable feedstocks. Consequently, the prospect of recycling PVB resin from post-industrial and post-consumer, recycled PVB has been long considered in the art as a potentially valuable source of PVB that would be less costly to produce than virgin PVB resin and that could significantly reduce the environmental footprint of PVB production. Exemplary sources of post-industrial include PVB rolls that are out of specification, damaged, or otherwise unusable. Exemplary sources of post-consumer, recycled PVB include previously-used automotive windshields and architectural safety glass, as well as other previously-used consumer products such as electric power devices (e.g., solar photovoltaic devices) and electronic display devices.

Despite the long felt need in the art, there are several problems with recycling PVB. For example, both post-industrial and post-consumer PVB generally comprises different mixtures of distinct PVB compositions, as obtained from various products and/or differing manufacturers, as well as additives such as plasticizer, UV absorbers, solar absorbers and the like. As a result, post-industrial and/or post-consumer PVB mixtures may comprise PVB of different poly(vinyl butyral) compositions, including different polyvinyl alcohol contents. Such compositional differences within the mixtures of recycled PVB invariably lead to unacceptable high haze and/or discoloration of the PVB despite the PVB being removed of other contaminants. Specifically, when PVB materials of significant compositional difference are mixed together, the chemical incompatibility results in hazy or cloudy material due to immiscible microdomains with different refractive indices, which greatly limits its utility in recycling.

Additionally, the presence of plasticizer in the recovered PVB makes it more difficult to reuse or recycle. By first separating or removing the plasticizer from the PVB, it is possible to return the PVB key components to their respective raw material states for recycle or reprocessing. The resulting reclaimed PVB resin obtained after separation can then be converted to a single PVB composition via, for example, re-acetalization in an ethanol solution.

In view of the above, there exists a need to process post-industrial and/or post-consumer PVB in a manner that can remove the plasticizer from the recycled PVB material, such that the resulting PVB is a clear polymer that can be used to make new PVB resin and interlayers, such as may be incorporated within new laminated glass panels.

WO 2015/169705 A1 discloses a method for recycling of glass laminates. The glass laminates comprise at least one glass layer and at least one polymer layer. The method comprises mechanical removal of at least part of the glass, placing residual waste with glass particles in a vat comprising a separation fluid to produce a mixture of glass particles and polymer pieces from the residual waste, from which the polymer pieces can be screened off, washed and dried for reuse. The separation fluid comprises water and at least one alcohol.

US 2009/209667 A1 discloses a method of recycling poly(vinyl butyral) resin and incorporating that poly(vinyl butyral) resin into laminated glass and other articles. Poly(vinyl butyral) resin is recovered from discarded laminated glass through a well defined process that includes all or most of the steps of granulation of the laminated glass, solvent extraction of plasticizer and impurities, dissolution of poly(vinyl butyral), pre-filtration of insoluble contaminants, color removal via adsorption or bleaching, post-filtration of carbon particles, precipitation of poly(vinyl butyral), and washing, stabilization, and drying of poly(vinyl butyral) resin.

US 3 256 212 A discloses a method of separating polyvinyl butyral from a homogeneous and intimate mixture of polyvinyl butyral with a plasticizer compatible therewith and which exerts a solvating action thereon, said method comprising contacting said mixture with a volatile liquid in which said plasticizer is substantially more soluble than is polyvinyl butyral, and separating the liquid phase from the polyvinyl butyral; said volatile liquid containing: (a) at least one member of the class consisting of aliphatic hydrocarbons of up to 12 carbon atoms, cycloaliphatic hydrocarbons of up to 12 carbon atoms, butyl ether, nitromethane, aromatic hydrocarbons, 1,1,1-trichloroethane, carbon tetrachloride, ethylene dichloride, acetone, diisobutyl ketone, acetonyl acetone, ethyl acetate, isopropyl acetate, amyl acetate and nitropropane; (b) up to 40 percent by weight of a member of the class consisting of chloroform, trichloroethylene, propylene dichloride, methyl ethyl ketone, methyl isobutyl ketone, cyclohexanone, butyl acetate and 2-amino-2-ethyl-1-propanol; and (c) up to 30 percent by weight of a member of the class consisting of dioxane, isophorone, alcohols, of 1 to 4 carbon atoms, diacetone alcohol and ethylene glycol monoethyl ether.

### BRIEF DESCRIPTION OF THE DRAWINGS

FIG. 1 is a flowchart of a method for recovering PVB according to embodiments of the present invention;
FIG. 2 is a schematic illustration of a laminated glass panel comprising a pair of glass plates opposing a polymer interlayer, with the polymer interlayer comprising a trilayer with a pair of skin layers opposing a core layer;
FIG. 3 is another schematic illustration of a laminated glass panel comprising a pair of glass plates opposing a polymer interlayer, with the polymer interlayer having a wedge shape;
FIG. 4 is a graph showing two examples of multiple stage extraction at two different temperatures with an ethanol/water mixture having a water content of 40%;
FIG. 5 is a graph showing different numbers of extraction cycles vs. yield of plasticizer removal;
FIG. 6 is a graph showing different numbers of extraction cycles for a higher initial polymer loading;
FIG. 7 is graph showing plasticizer extraction as a function of time and water percentage;
FIG. 8 is a GPEC chromatogram of extract showing no detectable resin between 16 and 23 min; and
FIG. 9 is a GPEC chromatogram of extracted sheet showing two resins between 16 and 23 min with less than 2 phr of plasticizer eluted between 8 and 10 min.

### SUMMARY

The present invention concerns a method of recovering poly(vinyl butyral) (PVB) as defined in claim 1. Preferred embodiments are defined in the claims depending thereon.

### DETAILED DESCRIPTION

### Adapted description (clean copy)

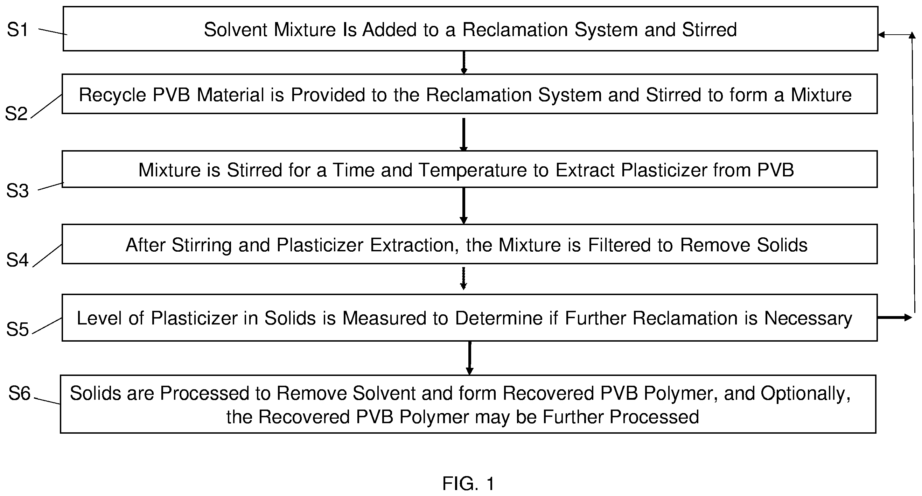

Embodiments of the present invention are directed to methods of recovering, recycling, and/or re-using poly(vinyl butyral) ("PVB"). More particularly, embodiments of the present invention are directed to methods of recycling post-industrial and/or post-consumer, recycled PVB to obtain PVB polymer of sufficient quality that can be used to form polymer interlayers and/or laminated glass panels comprising polymer interlayers, or used in other processing steps. In more detail, FIG. 1 illustrates an exemplary method of recycling PVB according to embodiments of the present invention. The method includes a step S1 of providing a solvent to a reclamation system. According to the present invention, the solvent is a mixture of an alcohol and water containing a certain amount of water such that the recycled PVB is not soluble in the alcohol, wherein the alcohol is ethanol, and the water is present in an amount of 30 to 40 wt.%, or wherein the alcohol is methanol, and the water is present in an amount of 15 to 25 wt.%, or wherein the alcohol is isopropanol, and the water is present in an amount of 40 to 48wt.%. The solvent mixture is stirred. The method includes an additional step S2 of adding recycled PVB material to the solvent to form a PVB mixture. The recycled PVB includes at least some plasticizer. An additional step S3 comprises stirring the PVB mixture for a specified time at a specified temperature to allow the plasticizer to be extracted from the recycled PVB to form a mixture of liquids and PVB solids. An additional step S4 may comprise filtering the PVB mixture to remove the PVB solids. An additional step S5 may comprise determining the level of plasticizer remaining in the PVB solids to determine if further reclamation is needed. If plasticizer is present (above the desired level) in the PVB solids, the process may be repeated by returning the PVB solids to step S1. An additional step S6 may comprise processing or treating the removed PVB polymer, such as with heat, evaporation and/or vacuum, to form a dried PVB polymer or dissolved PVB solution. Step S6 may optionally comprise further processing of the dried PVB polymer or dissolved PVB solution. The recovered PVB polymer will not retain a significant portion of the plasticizer that was originally included in the recycled PVB, and it may contain no detectable level of plasticizer. The resulting PVB polymer, which was recovered during the above-described steps, may be further treated, or may be of sufficient quality (e.g., of sufficient clarity and/or color) to be used in commercial products, such as in the manufacture of polymer interlayers and/or laminated glass panels comprising polymer interlayers, or to be used in a resin manufacturing process and re-acetalized to form PVB resin. The recovered PVB may also be used in other applications, such as adhesives that can be formed with the recovered PVB, as well as flooring, ceramic compositions, binders, coatings, inks, dispersions, and other applications.

Alcohol, such as ethanol, methanol and isopropanol, is a good solvent for both PVB and plasticizer when the alcohol, such as ethanol, is pure or has relatively low water content. The inventor has found that a solvent comprising a mixture of alcohol and water, where the water is present in a certain amount or level (as described below), can be used to reclaim or recycle PVB polymer where the solvent mixture only dissolves the plasticizer with minimal PVB resin dissolution during the process. This allows the plasticizer to be extracted and separated from the PVB polymer (resin).

PVB becomes insoluble in a solvent mixture of alcohol and water when the water content is greater than a certain amount by weight, while the plasticizer (such as triethylene glycol di-(2-ethylhexonate)) has significant solubility in the alcohol and water solvent mixture. If too little water is present in the solvent mixture, the recycle PVB will dissolve in the solvent, therefore, the solvent must be prepared and selected to have a certain optimal amount of water for removing or extracting the plasticizer from the recycle PVB.

Table 1 shows extracts of PVB that were obtained using different solvent mixtures (having different levels of alcohol in water) that were analyzed using gradient polymer elution chromatography (GPEC).

**Table 1**

| %water in alcohol | Alcohol Type | Pz/R* | resin loss %*** |
|---|---|---|---|
| 29.2 | Ethanol | 23.02 | 1.9 |
| 34.3 | Ethanol | NA** | 0 |
| 38.7 | Ethanol | NA** | 0 |
| 10.0 | Methanol | 8.7 | 5.1 |
| 15.0 | Methanol | 57.7 | 0.8 |
| 20.0 | Methanol | 111.8 | 0.4 |
| 25.0 | Methanol | NA** | 0 |
| 37.5 | Isopropanol | 28.3 | 1.6 |
| 42.8 | Isopropanol | >100 | <0.4 |
| 47.6 | Isopropanol | NA** | 0 |

| | | | |
|---|---|---|---|
| *Dissolved plasticizer (Pz) to resin (R) ratio in the solvent mixture **Resin is no longer detectable in GPEC chromatogram ***Resin loss % if plasticizer were to be extracted completely from the interlayers | | | |

As shown in Table 1, when the alcohol is ethanol, the optimum range for percent water by weight in the alcohol/water solvent mixture for extraction of plasticizer from the interlayer products is from 30 to 40%. If the amount of water in the ethanol/water mixture is greater than 40% by weight water, the solubility of plasticizer in the alcohol/water mixture becomes very limited. As shown in Table 1, if the water content in the solvent mixture is too low, the resin becomes increasingly more soluble in the ethanol, and if the water content is too high, the extraction efficiency decreases.

Similarly, if a solvent mixture of methanol and water is used, the optimum water range is from 15 to 25% water by weight. If the amount of water in the methanol/water mixture is greater than 25% by weight water, the solubility of plasticizer in the alcohol/water mixture becomes very limited. As shown in Table 1, if the water content in the solvent mixture is too low, the resin becomes increasingly more soluble in the methanol, and if the water content is too high, the extraction efficiency decreases.

Finally, if a solvent mixture of isopropanol and water is used, the optimum water range is from 40 to 48% water by weight. If the amount of water in the isopropanol/water mixture is greater than 48% by weight water, the solubility of plasticizer in the alcohol/water mixture becomes very limited. As shown in Table 1, if the water content is too low, the resin becomes increasingly more soluble in the isopropanol, and if the water content is too high, the extraction efficiency decreases.

Table 2 compares the efficiencies of the different alcohol/water solvent mixtures on extracted sheet at 22°C. The amounts shown in Table 2 represent the starting amount of plasticizer (at time 0) and the resulting levels of plasticizer in the PVB after one extraction cycle with an extraction time of 1 and 4 hours, respectively, for three different alcohol/water solvent mixtures.

**Table 2**

| time (h) | ethanol (29%wt water), phr | methanol (20% water), phr | Isopropanol (48% water), phr |
|---|---|---|---|
| 0 | 44.31 | 44.31 | 44.31 |
| 1 | 30.55 | 28.84 | 32.17 |
| 4 | 20.25 | 20.53 | 22.84 |

As shown by the data in Table 2, methanol with 20% water, ethanol with 29% water and isopropanol with 48% water have comparable extraction efficiencies, however, the solvent mixture comprising ethanol with 29% water would incur more resin loss than methanol with 20% water and isopropanol with 48% water, i.e., 1.9, 0.4 and 0% resin loss respectively (see Table 1). This shows that if similar efficiency is desired, the solvent system that has less resin loss or leaching may be preferred, depending on the desired outcome and available solvents.

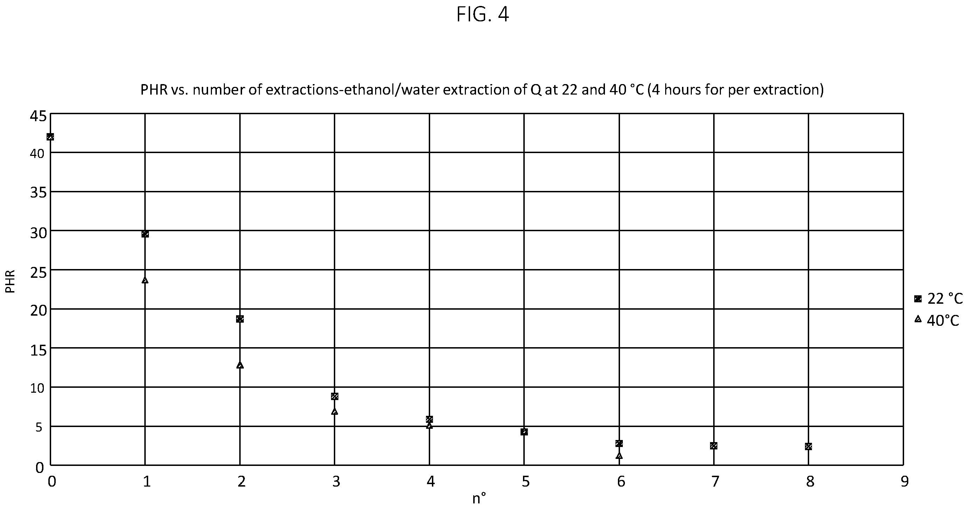

FIG. 4 illustrates two examples of multiple stage extraction at two different temperatures with an ethanol/water mixture having a water content of 40% and polymer loading of 11.8% by weight (wt.%). As shown by FIG. 4, higher temperatures are advantageous in earlier iterations of the extraction, but the advantage of the higher temperatures diminished in the later stages. This suggests that a temperature gradient approach can be applied in the multistage extraction process, with a higher temperature used in the earlier iterations and a lower temperature in later stages.

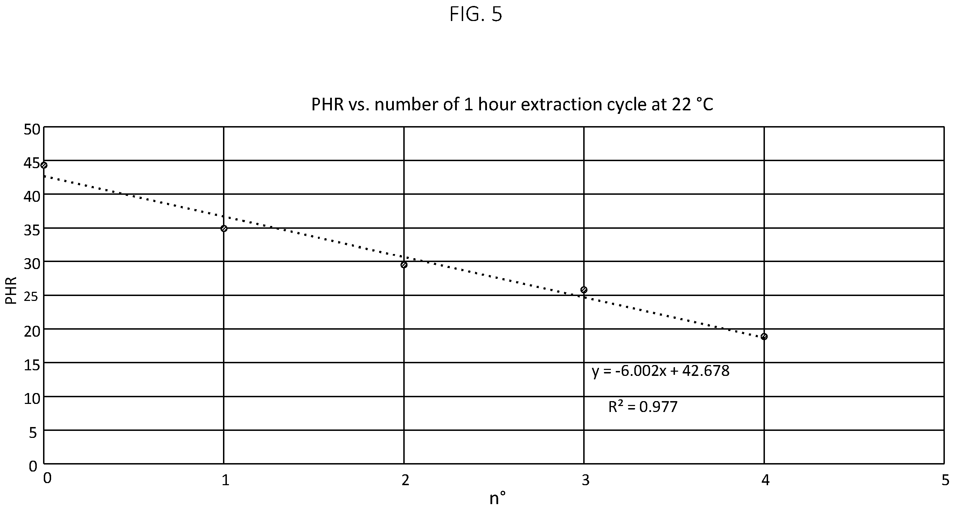

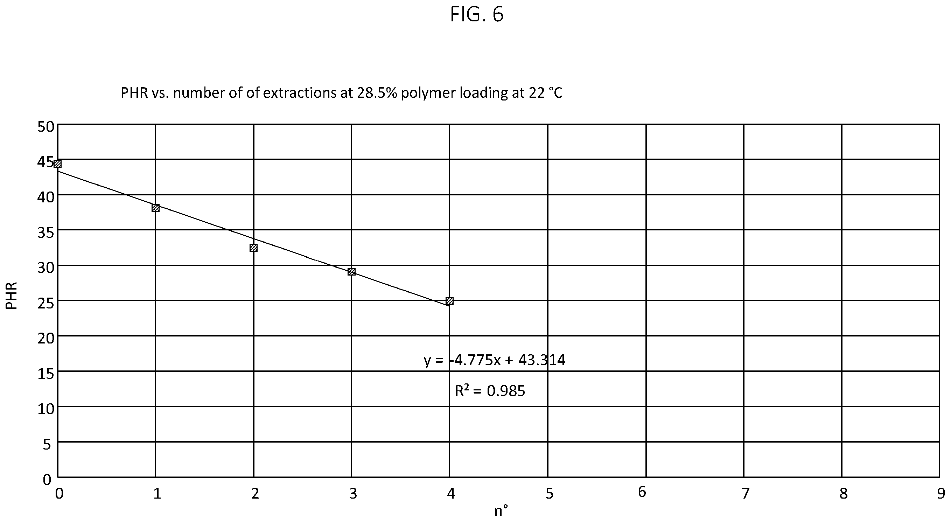

FIG. 5 shows that a shorter and more frequent extraction cycle yields more plasticizer removal, 50% in four cycles and four hours, compared with 30% in a single cycle of the same extraction duration. This indicates that the rate of extraction is also a function of plasticizer concentration in the extracts and polymer loading as further demonstrated in FIG. 6. FIG. 6 shows the extraction of plasticizer starting with a higher polymer loading of 28.5 wt.%. After each extraction, the amount of plasticizer remaining is reduced. Although the amount of plasticizer remaining is reduced, when comparing FIG. 6 to FIG. 4, when starting at a lower polymer loading (11.8 wt.% compared to 28.5 wt.%), the amount of plasticizer extracted, particularly in a shorter time, is much higher. The extraction efficiency of the process is higher when starting with a lower polymer loading.

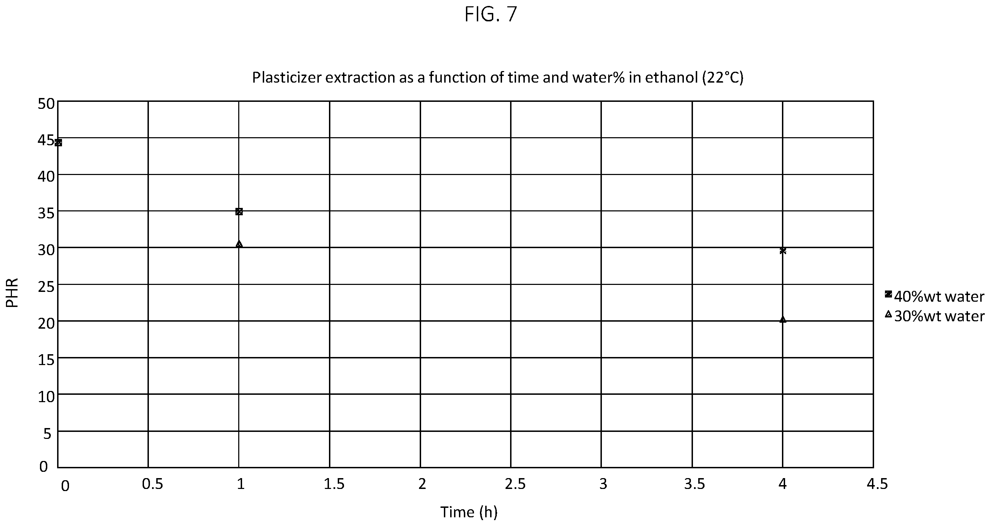

FIG. 7 shows the extraction rate differences at different mixtures of water and ethanol. As shown in FIG. 7, water reduces the rate of extraction but in order to limit the solubility of PVB resin, a minimum of 30% water in the ethanol/water mixture provides for less resin loss. As shown, it is necessary to select the optimum balance or ratio of water and alcohol in the solvent mixture. When more water is used in the solvent mixture, there is less resin leaching but at lower extraction efficiencies and rates.

The recycled PVB provided to the reclamation system of step S2 may comprise post-industrial and/or post-consumer, recycled PVB. Such post-industrial recycled PVB may include PVB rolls that are out of specification, damaged, or otherwise unusable, while such post-consumer recycled PVB may include material recovered from previously manufactured and/or used automotive windshields and architectural safety glass, as well as edge or other trim materials. The recycled PVB material may also include scrap or post-consumer materials from other consumer products such as electric power devices (e.g., solar photovoltaic devices), electronic display devices, etc., as well as other sources. The recycled PVB materials may have various PVB compositions, such as varying amounts of polyvinyl alcohol ("PVOH") amounts as well as varying amounts and types of plasticizer and other additives. For example, a first portion of the recycled PVB may have a PVOH amount from 9 to 15 weight percent (wt.%), a second portion of the recycled PVB may have a PVOH amount from 15 to 20 wt.%, and a third portion of the recycled PVB may have a PVOH amount from 20 to 25 wt.%. These PVOH amounts are only for illustrative purposes, and other ranges of PVOH amounts (or different PVOH ranges) may also be possible, depending on the materials used and the sources of the materials. In general, the recycled PVB may have an amount of PVOH of from 9 to 25 wt.% or more, although other amounts are possible, depending on the starting materials.

The recycled PVB may also include an amount of plasticizer (or different amounts of plasticizer, depending on the starting recycled PVB), which is generally used to soften the PVB and/or to lower the glass transition temperature T_{g} of the PVB. Contemplated plasticizers include, but are not limited to, esters of a polybasic acid, a polyhydric alcohol, triethylene glycol di-(2-ethylbutyrate), triethylene glycol di-(2-ethylhexonate) (known as "3-GEH"), triethylene glycol diheptanoate, tetraethylene glycol diheptanoate, dihexyl adipate, dioctyl adipate, hexyl cyclohexyladipate, mixtures of heptyl and nonyl adipates, diisononyl adipate, heptylnonyl adipate, dibutyl sebacate, and polymeric plasticizers such as oil-modified sebacic alkyds and mixtures of phosphates and adipates, and mixtures and combinations thereof. In some embodiments, 3-GEH is particularly preferred. Other examples of suitable plasticizers can include, but are not limited to, tetraethylene glycol di-(2-ethylhexanoate) ("4-GEH"), di(butoxyethyl) adipate, and bis(2-(2-butoxyethoxy)ethyl) adipate, dioctyl sebacate, nonylphenyl tetraethylene glycol, and mixtures thereof. Generally, the plasticizer content of PVB material (e.g., resin or scrap) will measured in parts per hundred resin parts ("phr"), on a weight per weight basis. For example, if 30 grams of plasticizer is added to 100 grams of polymer resin, the plasticizer content of the resulting plasticized polymer would be 30 phr. The recycled PVB material may have various amounts and/or types of plasticizer.

The recycled PVB material may be cut, chopped, and/or shredded to form small (such as 2 to 20 mm, although other sizes, including up to 1 cm, can be used depending on the equipment and other factors) diameter chips, granules, pellets or flakes of PVB material (wherein the chips, granules, pellets, flakes and the like are referred to herein as "comminuted PVB material"). The comminuted PVB material, such as the flakes, chips and/or pellets, of PVB material may be combined together to form a mixed composition (e.g., having a mixed amount of PVOH or other elements), or comminuted PVB from one source (such as a PVB roll having a known composition) may be used alone. Such comminuted PVB material may be provided to the reclamation system, which may be in the form of a single, batch reactor recycling system or a continuous reclamation recycling system. For example, the single, batch reactor may comprise a tank in the form of a continuous stirred-tank reactor (CSTR) or another similar reactor, such as a counter-current screw press extractor or other equipment known to one of skill in the art. One or more (or all) of the steps of the method described herein may be carried out within the single, batch reactor. Alternatively, a continuous reclamation system may be used, with the continuous reclamation system comprising a plurality of interconnected tanks (e.g., CSTRs) or compartments in a tubular arrangement. In the continuous reclamation system, each of the steps may be independently carried out within one or more of the plurality of tanks or compartments in a tubular arrangement. Benefits of the continuous reclamation system may include higher throughput and higher efficiencies compared to the single, batch reactor.

Turning to step S1, the solvent that is added to the reclamation system (e.g., to the single, batch reactor recycling system or the continuous reclamation recycling system) may comprise various solvents sufficient to selectively dissolve the components of the recycled PVB material and to form a solution or mixture. Examples of suitable solvents may include a mixture of one or more alcohols, e.g., ethanol, methanol or isopropanol, with a sufficient quantity of water to preferentially dissolve one or more components (such as plasticizer and other additives, such as UV absorbers, solar or infrared absorbers, antioxidants and the like) of the recycled PVB. The solvent mixture is configured to selectively dissolve the components of the recycled PVB material to form a PVB mixture that can be filtered to separate the PVB polymer from the solvent and other materials and impurities, such as the plasticizer. Other alcohols, such as alcohols having more than three (3) carbon atoms, such as n-butanol, or alcohols having more than one hydroxyl group (i.e., diols and triols) can also be used, so long as the alcohol is miscible in water.

Turning to step S2, the recycled PVB is added to the reclamation system (and the solvent) and stirred to form a PVB mixture.

Turning to step S3, the PVB mixture may be stirred for a period of time. The period of time of stirring may be at least 1 hour, at least 2 hours, at least 3 hours, at least 4 hours, at least 5 hours or more, although other times may be appropriate. The mixture may be stirred at room temperature (22 to 23°C), or the mixture may be heated, such as to a temperature of greater than room temperature, such as at least 25°C, at least 30°C, at least 35°C, at least 40°C, at least 45°C, or at least 50°C or more. The stirring time and temperature are selected such that they are effective to extract the plasticizer from the recycled PVB.

Turning to step S4, the step comprises filtering the PVB mixture to remove PVB polymer solids from the mixture. In some embodiments, the filter may comprise a screen, mesh, cloth, or other similar filtering element. With respect to step S4, the solvent and plasticizer (and other impurities) may be removed from the PVB mixture to obtain recovered PVB polymer. As will be described in more detail below, the recovered PVB may retain a significant level of the original plasticizer present in the recycle PVB after the initial filtering step. It may be necessary to return the recovered PVB to step S1 or S2 of the reclamation process to dissolve (and extract) the plasticizer further. The return to the start of the process may be done one or more times, and in embodiments, the return to the start of the process is repeated until the plasticizer is completely removed or to the point of an undetectable level. The recovered PVB may have some remaining plasticizer (if desired), or, after multiple iterations (further described below), there may be no detectable level of plasticizer or very small amounts of plasticizer (i.e., the recovered PVB may retain a small level the original plasticizer included as part of the original recycled PVB).

Turning to step S5, the recovered PVB solids may be analyzed to determine the amount of remaining plasticizer in the recovered PVB solids, and if the level of plasticizer is too high (i.e., above an undetectable level or above the desired level), the recovered PVB solids may be returned to the reclamation system after step S1 (where new solvent is added or present in the reclamation system).

Turning to step S6, the filtered mixture (i.e., the recovered PVB polymer) may have alcohol and water removed, such as by drying, evaporating or vacuum removal of the alcohol and water. For example, the recovered PVB solids may be dried, such as in an oven, for a period of time at a certain temperature to form a dried PVB polymer. The period of time for drying may be at least 1 hour, at least 2 hours, at least 3 hours, at least 4 hours, at least 5 hours, at least 6 hours, at least 7 hours, at least 8 hours, at least 9 hours, at least 10 hours, at least 11 hours, at least 12 hours or more. The temperature for drying may be at least 20°C, at least 25°C, at least 30°C, at least 35°C, at least 40°C, at least 45°C, at least 50°C, at least 55°C, at least 60°C, at least 65°C, at least 70°C or more. The time and temperature for drying may vary depending on the method used for drying or removing the water and alcohol.

In an alternate embodiment, the recovered PVB solids may be dissolved in a solvent, such as alcohol, for further processing without the need for drying or removal of the solvent. If the recovered PVB polymer is a known or homogeneous polymer, the recovered PVB polymer can be directly further processed. Further processing the recovered PVB may include the additional step of adding the recovered PVB polymer to a solvent, such as alcohol, and stirring at a certain temperature until the recovered PVB polymer is fully dissolved to form a PVB solution. An additional step includes filtering the PVB solution to remove the undissolved solids. An additional step includes subjecting the PVB solution to precipitation and washing with water to remove the solvent to obtain PVB solids. A further step includes filtering the PVB solids obtained and drying the filtered PVB solids to obtain recovered PVB polymer wherein the recovered PVB polymer is a single or homogeneous composition. Alternatively, instead of the precipitation, an additional step after filtration includes evaporation of the solvent to obtain recovered PVB polymer wherein the recovered PVB polymer is a single or homogeneous composition.

If the recovered PVB is a mixed or non-homogenous composition, further processing the recovered PVB may include the step of adding the recovered PVB polymer to a solvent, such as alcohol, and stirring at a certain temperature with a certain amount of catalyst and a certain amount of butyraldehyde for a specified time to dissolve and allow the recovered PVB polymer to equilibrate to a PVB solution. An additional step includes filtering the PVB solution to remove the undissolved solids. An additional step includes neutralizing the PVB solution with a base, such as potassium hydroxide (KOH), to form a neutralized PVB solution. An additional step includes subjecting the neutralized PVB solution to precipitation and washing with water to remove the solvent to obtain PVB solids. A further step includes filtering the PVB solids obtained and drying the filtered PVB solids to obtain recovered PVB polymer.

Alternatively, the recovered PVB polymer may optionally be further processed, such as in an acetalization process, so as to be used in an extrusion process (e.g., via an extruder or co-extruder) to form PVB interlayers and/or laminated glass panels that include PVB interlayers. The resulting recovered PVB polymer may be of sufficient quality and/or clarity to be used in commercial products, such as in the manufacture of polymer interlayers and/or laminated glass panels comprising polymer interlayers, especially for the cases of post-industrial recycled material. Notably, the recovered PVB polymer may retain very little or even none of the plasticizer that was originally included in the recycled PVB. For example, in some embodiments, the recovered PVB polymer may retain no more than 5%, no more than 4%, no more than 3%, no more than 2%, no more than 1.5%, no more than 0.5%, or 0% (or a level that is not detectable) of the plasticizer included in the original recycled PVB.

In certain embodiments, variations, additions, and/or subtractions may be made to the steps S1 to S6 described above. Additionally, the recovered PVB polymer may be subjected to further treatment, as described previously.

The PVB that was recovered using the recovering method steps described above may be used to form a resin, resin layer, polymer interlayer and/or a laminated glass panel comprising a polymer interlayer. The terms "polymer interlayer sheet," "interlayer," "polymer layer", and "polymer melt sheet" as used herein, may designate a single-layer sheet or a multilayered interlayer. A "single-layer sheet," as the name implies, is a single polymer layer extruded as one layer. A multilayered interlayer, on the other hand, may comprise multiple layers, including separately extruded layers, co-extruded layers, or any combination of separately and co-extruded layers. Thus, the multilayered interlayer could comprise, for example: two or more single-layer sheets combined together ("plural-layer sheet"); two or more layers co-extruded together ("co-extruded sheet"); two or more co-extruded sheets combined together; a combination of at least one single-layer sheet and at least one co-extruded sheet; and a combination of at least one plural-layer sheet and at least one co-extruded sheet. In various embodiments of the present invention, a multilayered interlayer comprises at least two polymer layers (e.g., a single layer or multiple layers co-extruded) disposed in direct contact with each other, wherein each layer comprises a polymer resin. The term "resin," as utilized herein refers to the polymeric component (e.g., PVB) removed from the mixture that results from the acid catalysis and subsequent neutralization of polymeric precursors. Generally, plasticizer, such as those discussed more above, will be added to the resins to result in a plasticized polymer. Additionally, resins may have other components in addition to the polymer and plasticizer including; e.g., acetates, salts and alcohols.

Although the above described recycling steps can be performed to yield recovered PVB with at least some inherent plasticizer (e.g., 3 to 5 phr of plasticizer), embodiments may require additional plasticizer to be added to the PVB before the PVB is used to form a polymer interlayer and/or a laminated glass panel comprising a polymer interlayer. For example, in some embodiments, an additional amount of from 25 to 50 phr, 25 to 45 phr, 30 to 40 phr, or 33 to 35 phr may be added to the resulting PVB before the polymer interlayer and/or the laminated glass panel is manufactured. In other embodiments, an additional amount of less than 25 phr, or less than 20 phr or less, or greater than 50 phr, or greater than 55 phr, or greater than 60 phr, or greater than 65 phr, or greater than 70 phr or more may be added to the resulting PVB before the polymer interlayer and/or the laminated glass panel is manufactured. Higher or lower amounts of plasticizer may be added as desired, depending on the desired properties and application.

The recovered PVB resin (or resins) typically has a molecular weight of greater than 30,000 Daltons, or less than 500,000 Daltons, or 30,000 to 500,000 Daltons, or 500,000 to 500,000 Daltons, or 100,000 to 425,000 Daltons, as measured by size exclusion chromatography using low angle laser light scattering. As used herein, the term "molecular weight" means the weight average molecular weight.

Once a sufficient amount of plasticizer is added to the recovered PVB, it is contemplated that polymer interlayer sheets may be produced by any suitable process known to one of ordinary skill in the art of producing polymer interlayer sheets that are capable of being used in a multiple layer panel (such as a glass laminate). For example, it is contemplated that the polymer interlayer sheets may be formed through solution casting, compression molding, injection molding, melt extrusion, melt blowing or any other procedures for the production and manufacturing of a polymer interlayer sheet known to those of ordinary skill in the art. Further, in embodiments where multiple polymer interlayers are utilized, it is contemplated that these multiple polymer interlayers may be formed through co-extrusion, blown film, dip coating, solution coating, blade, paddle, air-knife, printing, powder coating, spray coating or other processes known to those of ordinary skill in the art. While all methods for the production of polymer interlayer sheets known to one of ordinary skill in the art are contemplated as possible methods for producing the polymer interlayer sheets described herein, this application will focus on polymer interlayer sheets produced through extrusion and/or co-extrusion processes.

In the extrusion process, thermoplastic resin and plasticizers, including any of those resins and plasticizers described above, are generally pre-mixed and fed into an extruder device. Additives such as colorants and UV inhibitors (in liquid, powder, or pellet form) may be used and can be mixed into the thermoplastic resin or plasticizer prior to arriving in the extruder device. These additives are incorporated into the thermoplastic polymer resin, and by extension the resultant polymer interlayer sheet, to enhance certain properties of the polymer interlayer sheet and its performance in the final multiple layer glass panel product.

In the extruder device, the particles of the thermoplastic raw material and plasticizers, including any of those resins, plasticizers, and other additives described above, are further mixed and melted, resulting in a melt that is generally uniform in temperature and composition. Embodiments of the present invention may provide for the melt temperature to be approximately 200°C. Once the melt reaches the end of the extruder device, the melt is propelled into the extruder die. The extruder die is the component of the extruder device which gives the final polymer interlayer sheet product its profile. The die will generally have an opening, defined by a lip, that is substantially greater in one dimension than in a perpendicular dimension. Generally, the die is designed such that the melt evenly flows from a cylindrical profile coming out of the die and into the product's end profile shape. A plurality of shapes can be imparted to the end polymer interlayer sheet by the die so long as a continuous profile is present. Generally, in its most basic sense, extrusion is a process used to create objects of a fixed cross-sectional profile. This is accomplished by pushing or drawing a material through a die of the desired cross-section for the end product.

In some embodiments, a co-extrusion process may be utilized. Co-extrusion is a process by which multiple layers of polymer material are extruded simultaneously. Generally, this type of extrusion utilizes two or more extruders to melt and deliver a steady volume throughput of different thermoplastic melts of different viscosities or other properties through a co-extrusion die into the desired final form. For example, the multiple layer interlayers of the present invention (e.g., in the form of a trilayer interlayer) may be preferably co-extruded using a multiple manifold co-extrusion device which includes a first die manifold, a second die manifold, and a third die manifold. The co-extrusion device may operate by simultaneously extruding polymer melts from each manifold through a die and out of an opening, where the multiple layer interlayer is extruded as a composite of three individual polymer layers. The polymer melts may flow through the die such that the core layer is positioned between the skin layers, so as to result in the manufacture of a trilayer interlayer with the core layer sandwiched between the skin layers. The die opening may include a pair of lips positioned on either side of the opening. Given the positional orientation of the polymer melts, the skin layers may come into contact with the lips. Regardless, the interlayer thickness can be varied by adjusting the distance between die lips located at the die opening.

Often, polymer interlayers having three layers will be used in the manufacture of a laminated glass panel. For example, in some embodiments of this application, the increased acoustic attenuation properties of soft layers are combined with the mechanical strength of stiff/rigid layers to create a multilayered interlayer. In these embodiments, a central soft layer is sandwiched between two stiff/rigid outer layers. This configuration of (stiff)//(soft)//(stiff) creates a multilayered interlayer that is easily handled, can be used in conventional lamination methods and that can be constructed with layers that are relatively thin and light. The soft, core layer is generally characterized by a lower residual hydroxyl content, a higher plasticizer content, and/or a lower glass transition temperature than the relatively stiffer, skin layers.

The following offers a simplified description of the manner in which multiple layer glass panels are generally produced in combination with the interlayers formed according to the processes described above. First, as discussed above, a multiple layer interlayer may be co-extruded using a multiple manifold co-extrusion device. The device operates by simultaneously extruding polymer melts from each manifold toward an extrusion opening. Properties of the layers can be varied by adjusting attributes (e.g., temperature and/or opening dimensions) of the die lips at the extrusion opening. Once formed, the interlayer sheet can be placed between two glass substrates and any excess interlayer is trimmed from the edges, creating an assembly. It is not uncommon for multiple polymer interlayer sheets or a polymer interlayer sheet with multiple layers (or a combination of both) to be placed within the two glass substrates creating a multiple layer glass panel with multiple polymer interlayers. Then, air is removed from the assembly by an applicable process or method known to one of skill in the art; e.g., through nip rollers, vacuum bag or another deairing mechanism. Additionally, the interlayer is partially press-bonded to the substrates by any method known to one of ordinary skill in the art. In a last step, in order to form a final unitary structure, this preliminary bonding is rendered more permanent by a high temperature and pressure lamination process, or any other method known to one of ordinary skill in the art such as, but not limited to, autoclaving.

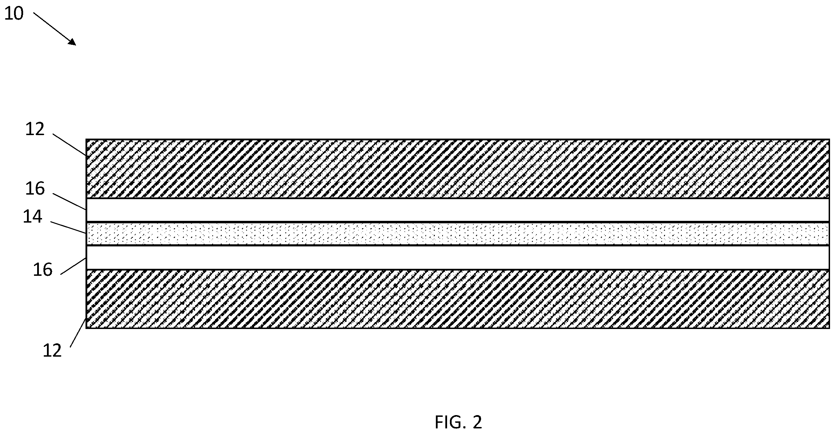

In view of the above, multiple layer panels are comprised of two sheets of glass, or other applicable substrates, with a polymer interlayer sheet or sheets sandwiched there-between. Multiple layer panels are generally produced by placing at least one polymer interlayer sheet between two substrates to create an assembly. FIG. 2 illustrates a multiple layer panel 10 comprising a pair of glass sheets 12 with a multilayered interlayer sandwiched therebetween. The multilayered interlayer is configured as a trilayer interlayer having three individual polymer interlayer sheets, including a soft core layer 14 and two relatively stiffer skin layers 16 positioned on either side of the core layer 14. Such glass panels that incorporate such a trilayer may, as discussed above, have superior acoustic properties due to the sound dampening provided by the soft, core layer.

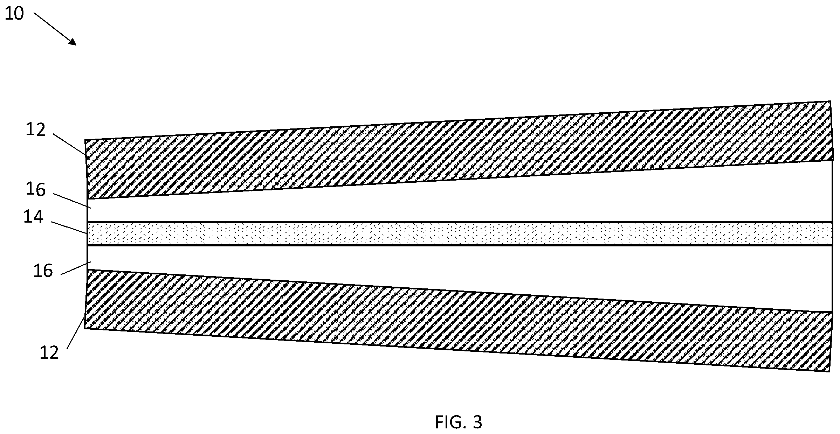

In some embodiments, the interlayer (e.g., the core layer 14 and the skin layers 16) will have a generally constant or uniform thickness the length of the interlayer (see, e.g., FIG. 2). However, in alternative embodiments, as shown in FIG. 3, the interlayer may have at least one region of non-uniform thickness. For example, the interlayer, comprised of the core layer 14 and skin layers 16, may be wedge-shaped, such that the thickness of the interlayer changes (e.g., linearly) the length of the interlayer. In some such embodiments, the thickness of the interlayer may change due to a thickness change in the core layer 14 (i.e., with the skin layers 16 having a generally constant thickness). Alternatively, the thickness of the interlayer may change due to a thickness change in the skin layers 16 (i.e., with the core layer 14 having a generally constant thickness). In further alternatives, the thickness of the interlayer may change due to a thickness change in both the core layer 14 and the skin layers 16. In further embodiments (not shown), one or more layers may increase in thickness in the cross machine direction of the interlayer while one or more layers are concurrently reduced in thickness, while maintaining an interlayer having at least one region of non-uniform thickness, such as a wedge-shaped interlayer. Such glass panels that incorporate such a trilayer may, as discussed above, have superior acoustic properties due to the sound dampening provided by the soft, core layer. In addition, due to the non-uniform thickness of the trilayer, the glass panels may provide beneficial characteristics for use in heads-up displays ("HUDs") by reducing unwanted image projection defects (e.g., reducing ghost images).

Beneficially, laminated glass panels formed with at least one polymer layer/interlayer containing the recovered PVB, obtained from the recovering method discussed above, may have superior optical qualities. Clarity is one measure of optical quality of a laminate. Clarity can be determined by measuring a haze value or percent of the laminate. Haze is a percentage of transmitted light that is scattered so that its direction deviates more than a specified angle from the direction of the incident beam. Haze may be measured using a haze meter or a spectrophotometer, known to one of skill in the art, and in accordance with ASTM D1003-Procedure B using Illuminant C, at an observer angle of 2 degrees. In some embodiments, glass panels, polymer layers, and/or interlayers that incorporate recovered PVB, as described herein, may have a haze value of less than 5 percent, less than 4 percent, less than 3 percent, less than 2 percent, less than 1, or less than 0.5 percent.

Color is another measure of optical quality of a laminate. Significant discoloration or yellowing of the laminate is often undesirable. Such discoloration is generally measured according to yellowness index ("YI") using an optical meter or a spectrophotometer, known to one of skill in the art, and in accordance with ASTM D1925. In some embodiments, glass panels, polymer layers, and/or interlayers that incorporate recovered PVB, as described herein, may have a YI of less than 12, less than 10, less than 8, less than 6, less than 5, less than 4, less than 3, less than 2, less than 1, or less than 0.5. In the examples provided below, the haze and YI values were measured as discussed above, in accordance with ASTM D1003 and ASTM D1925, respectively.

### EXAMPLES

### Example 1

A solvent mixture of 100 parts ethanol (SD29 alcohol) and 50 parts of deionized water were charged to a one liter three-neck jacketed glass reactor and stirred. To the stirred mixture, 20 parts of recycle trilayer PVB (consisting of 6 parts plasticizer and 14 parts of resin mixture of an average 17.4 wt.% PVOH) was added to the reactor and stirred for 1 hour at room temperature (22°C). The resulting mixture was then filtered and dried in an oven at 50°C for 12 hours. The dried polymer weighed 18.89 parts.

### Example 2

A solvent mixture of 100 parts ethanol (SD29 alcohol) and 50 parts of deionized water were charged to a one liter three-neck jacketed glass reactor and stirred. To the stirred mixture, 20 parts of recycle trilayer PVB (consisting of 6 parts plasticizer and 14 parts of resin mixture of an average 17.4 wt.% PVOH) was added and stirred for 4 hours at room temperature (22°C). The resulting mixture was then filtered and dried in an oven at 50°C for 12 hours. The dried polymer weighed 18.12 parts.

### Example 3

A solvent mixture of 100 parts ethanol (SD29 alcohol) and 30 parts of deionized water were charged to a one liter three-neck jacketed glass reactor and stirred. To the stirred mixture, 20 parts of recycle trilayer PVB (consisting of 6 parts plasticizer and 14 parts of resin mixture of an average 17.4 wt.% PVOH) was added and stirred for 4 hours at room temperature (22°C). The resulting mixture was then filtered and dried in an oven at 50°C for 12 hours. The dried polymer weighed 18.28 parts.

### Example 4

A solvent mixture of 100 parts ethanol (SD29 alcohol) and 30 parts of deionized water were charged to a one liter three-neck jacketed glass reactor and stirred. To the stirred mixture, 20 parts of recycle trilayer PVB (consisting of 6 parts plasticizer and 14 parts of resin mixture of an average 17.4 wt.% PVOH) was added and stirred for 4 hours at room temperature (22°C). The resulting mixture was then filtered and dried in an oven at 50°C for 12 hours. The dried polymer weighed 16.84 parts.

### Example 5

A solvent mixture of 100 parts ethanol (SD29 alcohol) and 50 parts of deionized water were charged to a one liter three-neck jacketed glass reactor and stirred. To the stirred mixture, 20 parts of recycle trilayer PVB (consisting of 6 parts plasticizer and 14 parts of resin mixture of an average 17.4 wt.% PVOH) was added and stirred for 4 hours at 40°C. The resulting mixture was then filtered and dried in an oven at 50°C for 12 hours. The dried polymer weighed 17.32 parts.

### Example 6

A mixture of 100 parts ethanol (SD29 alcohol) and 50 parts of deionized water were charged to a one liter three-neck jacketed glass reactor and stirred. To the stirred mixture, 60 parts of recycle trilayer PVB (consisting of 18 parts plasticizer and 42 parts of resin mixture of an average 17.4 wt.% PVOH) was added and stirred for 4 hours at room temperature (22°C). The resulting mixture was then filtered and dried in an oven at 50°C for 12 hours. The dried polymer weighed 57.99 parts. The process was repeated multiple times by using the resulting dried (recovered) polymer and adding it to the same proportion of alcohol/water solvent mixture, stirring, filtering and drying, and repeating until the weight of dried polymer no longer changed at 44 parts.

### Example 7

A mixture of 800 parts of ethanol (SD29 alcohol), 150 parts of the recycle PVB resin mixture (of an average 17.4 wt.% PVOH) obtained using the process of Example 6, 15 parts of butyraldehyde, 3 parts of water and 0.5 part of sulfuric acid were charged to a one liter three-neck jacketed glass reactor. The mixture was stirred and heated to 78°C, where the mixture was held for about four hours. The resulting mixture was cooled to 65°C and neutralized with 0.46 part of KOH until the mixture reached a pH of 6.7. The resulting cloudy mixture was further mixed with 8 equivalents of water in a high intensity mixer to form a PVB slurry. Alcohol and residual butyraldehyde were removed with fill and drain washing with deionized water, and the resulting slurry was filtered. After drying, the recovered PVB was pressed into a plasticized PVB sheet (with 38 phr plasticizer (3GEH)) having a thickness of 0.772 mm. The PVB sheet was laminated between two pieces of 2.3 mm glass. The haze of the laminate was measured at a value of below 1.0%, and the YI of the laminate was measured at a value of below 1.

### Example 8

A mixture of 80 parts methyl alcohol and 20 parts of deionized water were charged to a one liter three-neck jacketed glass reactor and stirred. To the stirred mixture, 20 parts of recycle trilayer PVB (consisting of 6 parts plasticizer and 14 parts of resin mixture of an average 17.4 wt.% PVOH) was added and stirred for 1 hour at room temperature (22°C). The resulting mixture was then filtered and dried in an oven at 50°C for 12 hours. The dried polymer weighed 18.03 parts.

### Example 9

A mixture of 80 parts methyl alcohol and 20 parts of deionized water were charged to a one liter three-neck jacketed glass reactor and stirred. To the stirred mixture, 20 parts of recycle trilayer PVB (consisting of 6 parts plasticizer and 14 parts of resin mixture of an average 17.4 wt.% PVOH) was added and stirred for 4 hours at room temperature (22°C). The resulting mixture was then filtered and dried in an oven at 50°C for 12 hours. The dried polymer weighed 16.63 parts.

Gradient polymer elution chromatography (GPEC) is a technique that can provide information on the composition of a copolymer or terpolymer and the concentration of the polymer components, including the amount of plasticizer. The GPEC method involves first dissolving the polymer (i.e., PVB) in a good solvent or using extracts if the concentration of the extracted components are of interest. The dissolved sample or solution is injected onto the column under solvent conditions where the polymer precipitates. The mobile phase is then changed to a gradient whereby the polymer will elute as it re-dissolves. In the case of PVB, the primary separation mechanism is believed to be the solubility of the PVB fractions in the mobile phase so that plasticizer is eluted first due to its high solubility in the solvents and lower molecular weight. There may also be a separation mechanism due to the interaction of the PVB with the column packing. Although there may be multiple factors influencing the separation, it is believed that the copolymer composition is the largest contributor. The GPEC method may be used to determine the polymer composition, or in this case, to determine the concentration of resins and plasticizer in the samples.

Experimental Conditions and Instrumentation used for GPEC testing:

### Instrument and Conditions:

i. Thermo Scientific Dionex Ultimate 3000 Series HPLC
ii. Corona Veo Charged Aerosol detector - Evaporator (low setting)
iii. Column: Supelco Discovery C18, 150mm, 4.6 mm, 5 micron, 180A.
iv. Column temperature: 30°C
v. Injection volume: 10 microliters
vi. Gradient (Flow rate: 1 ml/min)

| Time (min) | H2O % | MeOH % | Isopropanol % |
|---|---|---|---|
| 0 | 80 | 20 | 0 |
| 2 | 80 | 20 | 0 |
| 2.1 | 40 | 20 | 40 |
| 22.1 | 0 | 20 | 80 |
| 35.0 | 0 | 20 | 80 |
| 35.1 | 80 | 20 | 0 |
| 41 | 80 | 20 | 0 |

Sample Preparation: PVB interlayer solid samples were dissolved in glacial acetic acid and extracts were used as they were (approximately 0.05 to 0.5 g in 10 ml acetic acid). The solutions were left at room temperature to dissolve overnight. Sample types included extracts of alcohol/water mixtures, plasticizer solutions, plasticizer/resin gels and pellet, resin or sheet samples.

Quantification: The relative concentration of resin (R) and plasticizer (Pz) are estimated based on relative area percentages using the following equation:$Pz / R = \left(a∗Area plasticizer\right) / \left(Area resin\right)$ where a is the response coefficient.

The weight percent resin in a sample is determined by analysis of solutions of known resin concentration and determining a single point response factor or a linear calibration.

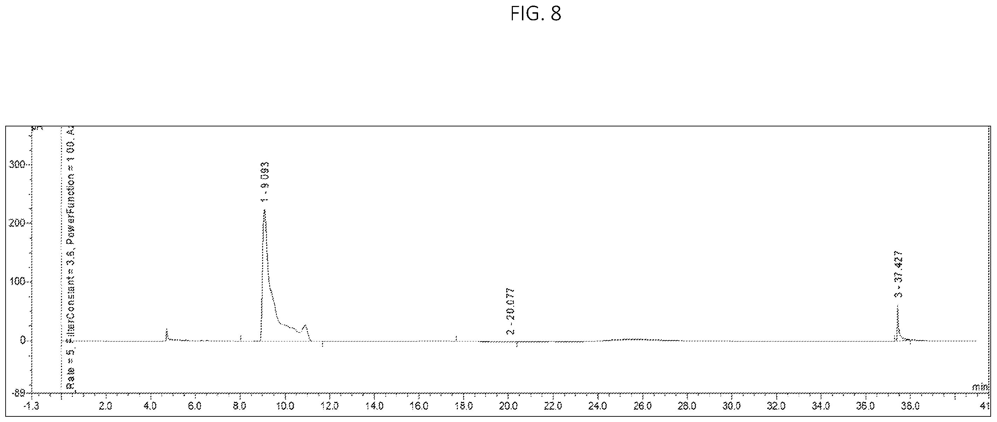

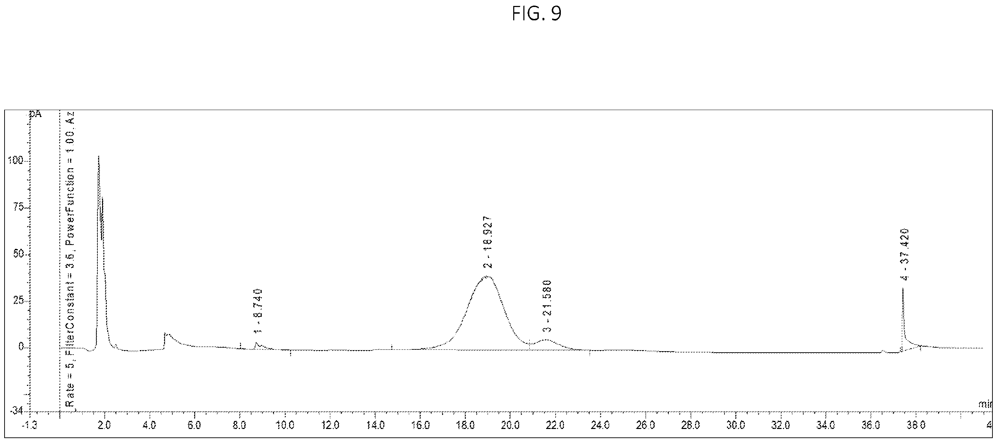

FIG. 8 is a GPEC chromatogram of extract showing no detectable resin between 16 and 23 minutes. FIG. 9 is a GPEC chromatogram of extracted sheet showing two resins between 16 and 23 minutes with less than 2 phr of plasticizer eluted between 8 and 10 minutes.

The Examples above show that recycle PVB can be processed to recover or reclaim the PVB polymer using certain steps, as previously described herein. Using the process described herein, the recycle PVB can be processed to recover a PVB polymer with little to no detectable level of plasticizer in it. The recovered PVB polymer can then be used in additional processes, as described above.

## Claims

1. A method of recovering poly(vinyl butyral) (PVB), said method comprising the steps of:
(a) providing a solvent to a reclamation system;
(b) adding recycled PVB-containing plasticizer to the solvent to form a PVB mixture and stirring the PVB mixture for a specified time and a specified temperature to allow the plasticizer to be extracted from the recycled PVB to form a mixture of liquids and PVB solids;
(c) filtering the PVB mixture to remove the PVB solids;
wherein the solvent added during step (a) is a mixture of water and alcohol,
wherein the alcohol is ethanol, and the water is present in an amount of 30 to 40 wt.%, or wherein the alcohol is methanol, and the water is present in an amount of 15 to 25 wt.%, or wherein the alcohol is isopropanol, and the water is present in an amount of 40 to 48 wt.%.

2. The method of claim 1, further comprising the step (d) measuring the level of plasticizer in the PVB solids.

3. The method of claim 2, further comprising the step (e) subjecting the PVB solids to heat to obtain recovered PVB polymer.

4. The method of claim 2, further comprising repeating the steps (a) to (d).

5. The method of any of claims 1 to 4, wherein the reclamation system to which the recycled PVB is provided in step (a) comprises a batch reactor system.

6. The method of any of claims 1 to 5, wherein the recycled PVB has a diameter of from 2 to 20 millimeters.

7. The method of any of claims 1 to 6, wherein the reclamation system to which the recycled PVB is provided in step (a) comprises a continuous reclamation system, preferably
wherein the continuous reclamation system is a continuous stirred-tank reactor.

8. The method of any of claims 1 to 7, wherein the recycled PVB is added to the solvent in an amount of at least 1 wt. % (5 wt. %, 10 wt. %, 15 wt. %, 20 wt. % or more).

9. The method of any of claims 1 to 8, wherein step (b) comprises stirring at a temperature from 22°C to 60°C (22°C to 50°C, 22°C to 40°C, 22°C to 30°C).

10. The method of any one of claims 1 to 9, wherein the time of stirring is at least one hour, at least two hours, at least three hours, at least four hours, or at least 5 hours or more.

## Patentansprüche

1. Verfahren zur Wiedergewinnung von Poly(vinylbutyral) (PVB), wobei das Verfahren die folgenden Schritte umfasst:
(a) Bereitstellen eines Lösungsmittels für ein Rückgewinnungssystem;
(b) Beigeben eines recycelten PVB-haltigen Weichmachers zu dem Lösungsmittel, um eine PVB-Mischung zu bilden, und Rühren der PVB-Mischung für eine spezifizierte Zeit und eine spezifizierte Temperatur, um es dem Weichmacher zu ermöglichen, aus dem recycelten PVB extrahiert zu werden, um eine Mischung aus Flüssigkeiten und PVB-Feststoffen zu bilden;
(c) Filtern der PVB-Mischung, um die PVB-Feststoffe zu entfernen;
wobei das Lösungsmittel, das während Schritt (a) beigegeben wird, eine Mischung aus Wasser und Alkohol ist,
wobei der Alkohol das Ethanol ist, und das Wasser in einer Menge von 30 bis 40 Gew.-% vorliegt, oder wobei der Alkohol das Methanol ist, und das Wasser in einer Menge von 15 bis 25 Gew.-% vorliegt, oder wobei der Alkohol das Isopropanol ist, und das Wasser in einer Menge von 40 bis 48 Gew.-% vorliegt.

2. Verfahren nach Anspruch 1, ferner umfassend den Schritt (d) Messen des Gehalts an Weichmacher in den PVB-Feststoffen.

3. Verfahren nach Anspruch 2, ferner umfassend den Schritt (e) Aussetzen der PVB-Feststoffe gegenüber Wärme, um das wiedergewonnene PVB-Polymer zu erhalten.

4. Verfahren nach Anspruch 2, ferner umfassend ein Wiederholen der Schritte (a) bis (d).

5. Verfahren nach einem der Ansprüche 1 bis 4, wobei das Rückgewinnungssystem, dem das recycelte PVB in Schritt (a) bereitgestellt wird, ein Chargenreaktorsystem umfasst.

6. Verfahren nach einem der Ansprüche 1 bis 5, wobei das recycelte PVB einen Durchmesser von 2 bis 20 Millimetern aufweist.

7. Verfahren nach einem der Ansprüche 1 bis 6, wobei das Rückgewinnungssystem, dem das recycelte PVB in Schritt (a) bereitgestellt wird, ein kontinuierliches Rückgewinnungssystem umfasst, vorzugsweise
wobei das kontinuierliche Rückgewinnungssystem ein kontinuierlicher Rührkesselreaktor ist.

8. Verfahren nach einem der Ansprüche 1 bis 7, wobei das recycelte PVB dem Lösungsmittel in einer Menge von mindestens 1 Gew.-% (5 Gew.-%, 10 Gew.-%, 15 Gew.-%, 20 Gew.-% oder mehr) beigegeben wird.

9. Verfahren nach einem der Ansprüche 1 bis 8, wobei Schritt (b) ein Rühren bei einer Temperatur von 22 °C bis 60 °C (22 °C bis 50 °C, 22 °C bis 40 °C, 22 °C bis 30 °C) umfasst.

10. Verfahren nach einem der Ansprüche 1 bis 9, wobei die Zeit des Rührens mindestens eine Stunde, mindestens zwei Stunden, mindestens drei Stunden, mindestens vier Stunden oder mindestens 5 Stunden oder mehr beträgt.

## Revendications

1. Procédé de récupération de poly(butyral de vinyle) (PVB), ledit procédé comprenant les étapes suivantes :
(a) la fourniture d'un solvant à un système de réclamation ;
(b) d'ajout d'un plastifiant contenant du PVB recyclé au solvant pour former un mélange de PVB et agiter le mélange de PVB pendant une durée et à une température spécifiées pour permettre au plastifiant d'être extrait du PVB recyclé afin de former un mélange de liquides et de solides de PVB ;
(c) de filtrage du mélange PVB pour éliminer les solides PVB ; dans lequel le solvant ajouté au cours de l'étape (a) est un mélange d'eau et d'alcool,
dans lequel l'alcool est de l'éthanol et l'eau est présente en une quantité de 30 à 40 % en poids, ou dans lequel l'alcool est du méthanol et l'eau est présente en une quantité de 15 à 25 % en poids, ou dans lequel l'alcool est de l'isopropanol et l'eau est présente en une quantité de 40 à 48 % en poids.

2. Procédé selon la revendication 1, comprenant en outre l'étape (d) de mesure du niveau de plastifiant dans les solides PVB.

3. Procédé selon la revendication 2, comprenant en outre l'étape (e) consistant à soumettre les solides PVB à la chaleur pour obtenir le polymère PVB récupéré.

4. Procédé selon la revendication 2, comprenant en outre la répétition des étapes (a) à (d).

5. Procédé selon la revendication 1 à 4, dans lequel le système de réclamation auquel le PVB recyclé est fourni à l'étape (a) comprend un système de réacteurs discontinus.

6. Procédé selon l'une quelconque des revendications 1 à 5, dans lequel le PVB recyclé a un diamètre de 2 à 20 millimètres.

7. Procédé selon la revendication 1 à 6, dans lequel le système de réclamation auquel le PVB recyclé est acheminé à l'étape (a) comprend un système de réclamation discontinue, de préférence dans lequel le système de réclamation continue est un réacteur à cuve agitée en continu.

8. Procédé selon l'une quelconque des revendications 1 à 7, dans lequel le PVB recyclé est ajouté au solvant en une quantité d'au moins 1 % en poids (5 % en poids, 10 % en poids, 15 % en poids, 20 % en poids ou plus).

9. Procédé selon l'une quelconque des revendications 1 à 8, dans lequel l'étape (b) comprend une agitation à une température de 22°C à 60°C (22°C à 50°C, 22°C à 40°C, 22°C à 30°C).

10. Procédé selon l'une quelconque des revendications 1 à 9, dans lequel la durée d'agitation est d'au moins une heure, d'au moins deux heures, d'au moins trois heures, d'au moins quatre heures ou d'au moins cinq heures.
